# EUROPEAN PATENT SPECIFICATION

(11) **EP 3 885 618 B1**
(45) Date of publication and mention of the grant of the patent: **27.12.2023**
(21) Application number: 20164879.7
(22) Date of filing: 23.03.2020
(51) Int. Cl.: F16K 15/02, F16K 27/02

(54) **PNEUMATIC VALVE, CABIN LEVELLING SYSTEM AND VEHICLE**
PNEUMATISCHES VENTIL, KABINENNIVELLIERUNGSSYSTEM UND FAHRZEUG
SOUPAPE PNEUMATIQUE, SYSTÈME DE MISE À NIVEAU DE CABINE ET VÉHICULE

(43) Date of publication of application: 29.09.2021
(73) Proprietor: ZF CV Systems Europe BV, 1170 Brussels (BE)
(72) Inventor: REPELA, Marek, 53238 Wroclaw (PL); ZAK, Przemyslaw, 50-436 Wroclaw (PL)
(74) Representative: Ohlendorf, Henrike

(56) References cited:
- EP-A1- 3 401 134
- EP-A1- 3 581 409
- WO-A1-2019/057374
- DE-T2- 69 303 635
- GB-A- 1 357 872
- US-A- 5 392 805
- US-A1- 2014 348 677
- US-B1- 8 613 290

## Description

The invention relates to a pneumatic valve, in particular a pneumatic cabin levelling valve for a vehicle, comprising a valve seat body and a valve casing and a port body, wherein the valve seat body is held in a valve passage, which extends cylindrically through the valve casing along a valve axis, and the valve seat body comprises a check valve body, movable along the valve axis between an open state to allow a gas flow, in particular an air flow, in an inward flow direction and a closed state, and the port body is held in the valve passage axially adjacent to the valve seat body.

Valves, in particular pneumatic cabin levelling valves for vehicles, are generally well known. A valve designed for use with a pneumatic system generally comprises at least one port for pneumatically connecting the valve to a pneumatic system, for example a pneumatic cabin levelling system. A valve can comprise a port body as a connector between a port of the valve and a pneumatic connection, in particular a pressure hose, a pressure pipe, or a similar pneumatic connection.

A port body can in particular be adapted to connect with a connection partner, in particular a fitting of a pressure hose or of a pressure pipe, in a positively locking manner. Such a positively locking pneumatic connection can particularly be of a push-in type and/or a push-pull type, in particular it can be a connection where the pressure port is lockingly inserted by being pushed into a corresponding fitting. The fitting can either be located in the valve (wherein the port body then is part of the pneumatic connection, in particular part of a pressure hose) or in the pneumatic connection (wherein the pressure port is then part of the valve).

EP 3 581 409 A1 discloses an air regulation valve for a cabin suspension system of a motor vehicle. The air regulation valve comprises a valve seat, a valve body and a valve passage element. A valve passage element comprising a valve seat is arranged in the valve passage, with its axial movability limited by a valve stop on an outlet side and a system connection plug on an inlet side fixing the valve passage element in an outer housing of the air regulation valve. The valve body is pressed against the valve seat by a coil spring. A damping body is arranged in an inner spring space of the coil spring.

A fluidic discharge and supply valve for use as a levelling valve for a pneumatic bellows and comprising a spring-charged non-return flap is disclosed in DE 693 03 635 T2.

Reducing noise during operation of a pneumatic valve still constitutes a technical challenge. In particular, separated and/or single components of a valve, such as a valve seat body or a pressure port, are subject to a certain degree of movability. Such movability particularly exists in a mounted state of the valve, i. e. after assembly. Components, such as a valve seat body, are regularly held in place in a positively locking manner, wherein certain gaps in between components allow for a better assembly and/or for a certain degree of thermal expansion during operation.

Pneumatic valves should be improved with respect to a low noise level during operation, while functioning reliably and being easy to assemble. Accordingly, it is an object of the invention to provide a pneumatic valve and a system with the pneumatic valve wherein a noise level during operation is reduced, in particular when the pneumatic valve, as known in the art, has a movable component.

In accordance with a first aspect of the invention to solve the object, a valve is proposed according to claim 1.

A pneumatic valve, in particular a pneumatic cabin levelling valve for a vehicle, is proposed that comprises a valve seat body and a valve casing and a port body. The valve seat body is held in a valve passage, which extends cylindrically through the valve casing along a valve axis. The valve seat body comprises a check valve body that is movable along the valve axis between an open state to allow a gas flow, in particular an air flow, in an inward flow direction and a closed state. The port body is held in the valve passage axially adjacent to the valve seat body. In particular, "axially adjacent" means that the port body is arranged to positively lock the valve seat body in the valve passage. In particular, a direct contact between the valve seat body and the port body is not necessary.

In accordance with the invention, it is proposed that the valve comprises a spacer body, which is arranged between the port body and the valve seat body, wherein the spacer body comprises a base disc with at least one ventilation bore, which is adapted for allowing a gas flow, in particular a flow of pressurized air, between the port body and the valve seat body.

The invention is based on the idea that a movability of valve components - caused by a gaps or the like spaces between valve components - can lead to the emission of noise, particularly during operation of the valve. In particular when a pressure in a volume pneumatically connected to the valve changes, a balance of forces acting on a certain valve component, in particular on the valve seat body, can change as well. Such a change of forces can result in a movement, in particular an axial movement, of the valve component in question, in particular of the valve seat body. Such movement is stopped when the moving component hits its neighbouring, adjacent component, in particular the pressure port. By the impact between the components, in particular by the impact of the valve seat body on the pressure port, noise is generated. Such noise can in particular be perceived as a clicking noise and can be perceived as annoying by vehicle passengers if the valve is employed in a vehicle or by people in proximity of the valve and/or the vehicle.

The invention includes the finding that the spacer body is advantageously suitable for reducing, in particular cancelling, such noise. By being arranged between the port body and the valve seat body, the spacer body limits, in particular completely inhibits, the movement of a valve component in a gap, in particular of the valve seat body between a valve casing and the pressure port.

A base disc of the spacer body is adapted to be inserted into the axial gap to prevent any impact between the components surrounding the gap, in particular any impact between the port body and the valve seat body. A ventilation bore - despite their separation through the base disc - allows for a pneumatic connection between the two adjacent components, in particular between the valve seat body and the port body.

The invention further includes the finding that the spacer body is particularly advantageous for a pneumatic valve comprising a check valve, since the movement of a check valve body of the check valve - and, in particular, an impact of the check valve body onto a valve seat of the valve seat body - increases the valve seat body's tendency of axial movement during operation. Therefore, the inventive spacer body can advantageously reduce axial motion and thus noise emission in such an embodiment, in particular the spacer body allows to cancel clicking noise during the exhaust air flow in the valve, in particular in a cabin levelling valve.

According to a second aspect of the invention, a cabin levelling system for a vehicle is proposed, with a conduit for a gas flow, in particular a pressurized air flow, wherein the conduit comprises a pneumatic valve according to the first aspect of the invention.

Another aspect of the invention is a vehicle with a cabin levelling system as described above.

Further developments of the invention can be found in the dependent claims and show particular advantageous possibilities to realize the above-described concept in light of the object of the invention and regarding further advantages.

In an embodiment of the invention, the spacer body is made of a flexible material, in particular rubber. The flexible material of the spacer body allows holding the component in question in place gently, in particular the valve seat body, yet still allows for a certain degree of (thermal) expansion of the component as well as for a hassle-free assembly. Furthermore, - in cases where a remaining movability of one or more components exist despite a spacer body - the flexible material of the spacer body dampens the impact between components that otherwise would move with respect to one another during the operation of the valve, in particular an impact of the valve seat body on the port body.

According to the invention, the spacer body comprises an annular protrusion, in particular a protrusion in the shape of a hollow cylinder, adapted to engage with a valve seat body inlet of the valve seat body. An annular protrusion of the spacer body particularly improves the fixation of the spacer body in its assembled state and facilitates the assembly of the spacer body with a valve seat body inlet of the valve seat body. In particular, such an annular protrusion, when inserted into the valve seat body inlet, inhibits any movement of the spacer body in a radial direction.

It is suggested in a further embodiment of the invention for the spacer body to comprise at least one axial rib, extending axially on the annular protrusion, in particular on an outer protrusion surface of the annular protrusion. Such an axial rib can be of semi-cylindrical shape. In particular, an axial rib or a plurality of, for example eight, axial ribs advantageously generates or generate a radial force between the annular protrusion and the valve seat body inlet for fixation, while still allowing for a relatively easy assembly, since friction is only generated between the axial ribs and the valve seat body inlet - and not over the complete outer protrusion surface. Therefore, the spacer body can be inserted into the valve seat body inlet with relatively little effort.

It is suggested in a further embodiment of the invention for the spacer body to comprise at least one radial rib, extending radially on the base disc, in particular on a valve-seat-facing side of the spacer body. In this embodiment, a radial rib or a plurality of, for example eight, radial ribs is or are in particular arranged on a valve-seat-facing side of the spacer body. A radial rib has the advantage of further increasing the flexibility and/or elasticity of the spacer body in an axial direction. This is particularly the case because during assembly not the complete base disc needs to be compressed, but only the radial ribs contacting the valve seat body. By adapting the number and/or the size of the radial ribs and/or the elasticity of the material of the spacer body, mechanical properties of the spacer body can be adjusted. The mechanical properties can particularly be adjusted in such a way that the spacer body is flexible enough to allow for an easy assembly and a certain degree of expansion of the valve seat body, but on the other hand is rigid enough to inhibit any movement of the valve seat body and/or the emission of noise during the operation of the valve.

In an embodiment of the invention, an overall base thickness of the base disc with the axial and/or radial rib is between 0.5 mm and 1.15 mm. In other embodiments, the overall base thickness is slightly higher, in particular between 1 mm and 2 mm, in order to fill in an axial gap of a size between 0.5 mm and 1.15 mm, in particular under axial compression of the flexible spacer body. In such embodiments with an overall base thickness higher than the axial gap, in particular with an overall base thickness between 1 mm and 2 mm, an axial movement of the valve seat body can be reliably inhibited.

It is suggested for the ventilation bore to be cylindrical and coaxially aligned with the valve axis and/or the main axis. In particular, the diameter of the ventilation bore may be equal or approximately equal to the diameter of the port passage and/or the valve seat body inlet. In alternative embodiments, the spacer body can comprise a plurality of ventilation bores arranged on the base disc. In particular, the plurality of ventilation bores can be arranged in a pattern, such as along a circular line or several concentric circular lines around a centre point on the valve axis and/or the main axis. The ventilation bore may have a shape other than a cylindrical shape, for example an elliptical, conical or rectangular shape.

In an embodiment of the invention, the pneumatic valve as described above is adapted to be a pneumatic cabin levelling valve for a vehicle. As described above, people travelling in a vehicle may be particularly affected by a pneumatic valve which causes a noise. The inventive pneumatic valve, in which noise is supressed, is therefore particularly suited to being employed in a vehicle.

These and other aspects of the invention will be apparent from and elucidated with reference to the embodiments described hereinafter. The embodiments of the invention are described in the following on the basis of the drawings in comparison with the state of the art, which is also partly illustrated. The drawings are not necessarily intended to represent the embodiments to scale. Drawings are, where useful for explanation, shown in schematized and/or slightly distorted form. With regard to additions to the lessons immediately recognizable from the drawings, reference is made to the relevant state of the art. The features of the invention disclosed in the description, in the drawings and in the claims may be essential for the further development of the invention, either individually or in any combination.

Further advantages, features and details of the invention result from the following description of the illustrated embodiments as well as from the drawings, which show in:
- Fig. 1: an embodiment of a valve according to the concept of the invention in a mounted state,
- Fig. 2: an embodiment of the spacer disc in a perspective view for a valve of Fig. 1,
- Fig.3A, Fig. 3B, Fig. 3C: a side view, a sectional view from the side and a top view of the embodiment of the spacer disc of Fig. 2,
- Fig. 4: in schematic form a vehicle with a cabin levelling system, comprising a pneumatic valve according to the concept of the invention, in particular the preferred embodiment thereof.

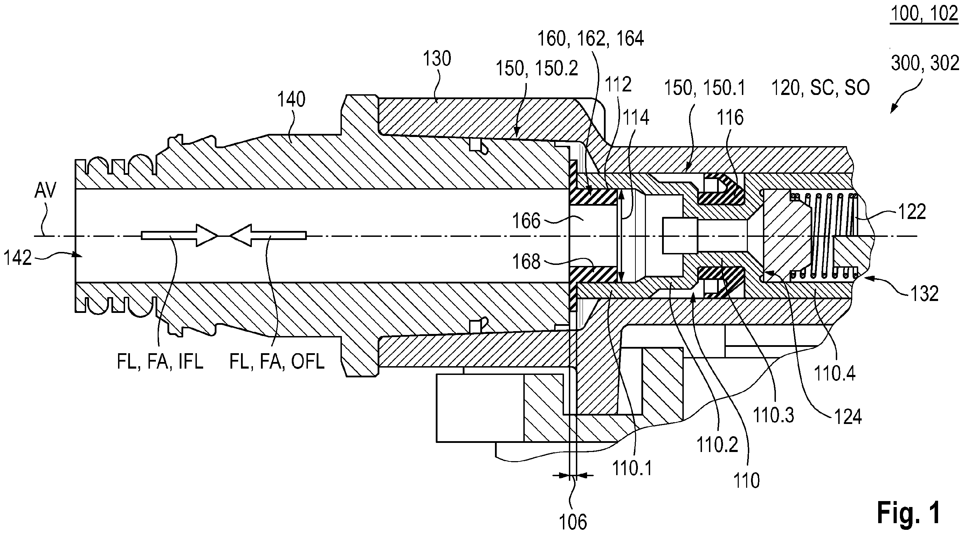

Fig. 1 illustrates a detail of a pneumatic valve 100 according to the concept of the invention, in the form of a pneumatic cabin levelling valve 102. The pneumatic valve 100 is part of a cabin levelling system 300 and arranged in a conduit 302 of the cabin levelling system 300, both of which are not shown in further detail here. The pneumatic valve 100 comprises a valve casing 130, which in turn comprises a valve passage 150, in which several valve components are arranged, in particular along a valve axis AV. In particular, the valve passage 150 can be part of the conduit 302 or can be pneumatically connected to the conduit 302. A valve seat body 110 is held within an inner section 150.1 of the valve passage 150. The inner section 150.1 of the valve passage 150 is basically of cylindrical shape and extends along the valve axis AV. The valve seat body 110 is basically rotationally symmetric with its main axis coaxially aligned with respect to the valve axis AV.

The valve passage 150 further comprises an outer section 150.2, which has a larger diameter compared to the inner section 150.1 and here is of frustoconical shape, with its inner diameter slightly increasing along the valve axis AV in an outward flow direction OFL, opposite to an inward flow direction IFL. The outer section 150.2 holds a port body 140. The port body 140 comprises a port passage 142, which extends cylindrically along the valve axis AV. The port body 140 serves as a connecting means for pneumatically connecting the pneumatic valve 100 to a pressure hose or similar pneumatic connection of an air supply system (not shown). The port body 140 is adapted to engage with a fitting or a similar connector of a pneumatic connection, in particular of a pressure hose. The port body 140 in its assembled position positively locks the valve seat body 110, so that the valve seat body 110 is axially limited by the port body 140 on one side and a valve seat body stop 132 of the valve casing 130 on the opposite side.

The port body 140 can be fixed within the outer section 150.2 by means of screwing, clamping or any known mounting technique. For this purpose, the port body 140 for example can comprise a thread adapted to engage with a corresponding thread on an inner surface of the outer section 150.2. Also other known mounting techniques are possible, in particular positively locking mounting techniques.

The valve seat body 110 in principle is of a hollow cylindrical shape or in the shape of several, pneumatically connected, hollow cylindrical sections. The valve seat body 110 comprises a valve seat body inlet 112, as a first hollow cylindrical section 110.1, on its axial end facing towards the port body 140. The valve seat body inlet 112 has an inner inlet diameter 114. Axially adjacent in an inward flow direction IFL, the valve seat body 110 comprises a second hollow cylindrical section 110.2 with a slightly decreased inner diameter as well as outer diameter. Further, adjacent to the second hollow cylindrical section 110.2 in inward flow direction IFL, the valve seat body 110 comprises a third hollow cylindrical section 110.3 with a further decreased inner and outer diameter in order to accommodate on its outer side a radial sealing 116. The radial sealing 116 is adapted to pneumatically seal a gap between the valve seat body 110 and the inner section 150.1 of the valve passage 150.

Further, adjacent to the third hollow cylindrical section 110.3 in inward flow direction IFL, the valve seat body 110 comprises a fourth hollow cylindrical section 110.4, which comprises an increased inner as well as outer diameter, compared to the third hollow cylindrical section 110.3. The fourth hollow cylindrical section 110.4 is adapted to accommodate a check valve body 120 in an axially movable manner. The check valve body 120 is pressed by a retainer spring 122 against a valve seat 124 located at the border of the third hollow cylindrical section 110.3. In this configuration, the check valve body 120 is adapted to open in an open state SO and to allow a gas flow FL, in particular a pressurized air flow FA, in the inward flow direction IFL, through an axial movement of the check valve body 120 against the retainer spring 122. Consequently, the check valve body 120 is adapted to block a gas flow in an outward flow direction OFL, opposite to the inward flow direction IFL, in a closed state SC. Therefore, the valve seat body 110 with the check valve body 120 is adapted to block a gas flow FL, in particular a pressurized air flow FA, in the outward flow direction OFL. In Fig. 1, the valve body 120 is shown in its closed state SC.

During operation of the pneumatic valve 100, in particular during pressure changes and/or changes of the direction of the gas flow FL, the valve seat body 110 can be subject to small movements along the valve axis AV, in particular when a certain axial gap 106 exists between the port body 140 and the valve seat body 110. The axial gap in particular amounts to a value between 0.5 mm and 1.15 mm. Such axial gap 106 can be due in particular to constructive reasons, such as the allowance of manufacturing inaccuracies during the assembly of the pneumatic valve 100, or allowing for thermal expansion of single components such as the valve seat body 110 while avoiding deformations.

When such axial movements of the valve seat body 110 occur, noise is likely to be emitted, particularly from the valve seat body 110 and/or the port body 140, which can be audible throughout the vehicle 1000, in particular to passengers of the vehicle 1000 or people in proximity of the vehicle 1000.

According to the concept of the invention, a spacer body 160 comprised of a flexible material 162, in particular rubber 164, is inserted in the axial gap 106 for advantageously inhibiting such axial movement of the valve seat body 110.

The spacer body 160 basically is of an annular disc shape, with a ventilation bore 166 for allowing gas, in particular air, to flow through it. Further, the spacer body 160 can comprise an annular protrusion 168, protruding axially in a hollow cylindrical shape. Such annular protrusion 168 is particularly adapted to be inserted into the valve seat body inlet 112. In alternative embodiments, the spacer body 160 can comprise two or more ventilation bores 166 (not shown in Fig. 1).

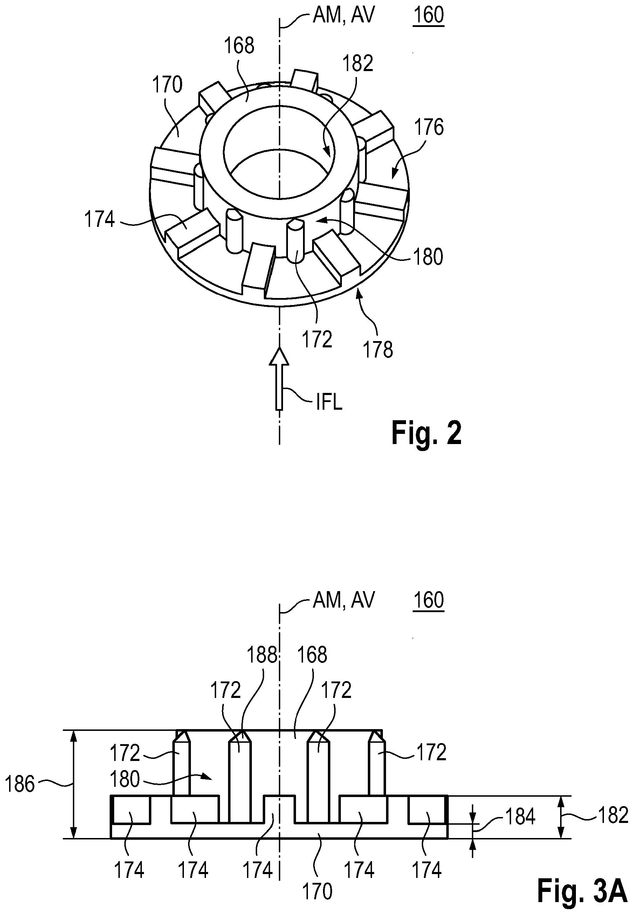

Fig. 2 illustrates a preferred embodiment of a spacer body 160. The shown spacer body 160 comprises a number of eight axial ribs 172, which extend radially from an outer protrusion surface 180 of an annular protrusion 168. Each axial rib 172 is of a semi-cylindrical shape. Also, other shapes of axial ribs 172 are possible. Further, the spacer body comprises a base disc 170, which is principally of a flat, annular disc shape, adapted to be inserted in an axial gap 106, in particular between the port body 140 and the valve seat body 110, as shown in Fig. 1. The base disc 170 comprises, on a valve seat-facing side 176 of the spacer body 160, eight radial ribs 174, protruding axially from the base disc 170. Each radial rib 174 is principally of rectangular shape. Other shapes of radial ribs 174 are possible. The axial ribs 172 and the radial ribs 174 are evenly distributed around the circumference of the spacer body 160.

Fig. 3A shows a side view of an embodiment of a spacer body 160. The spacer body 160 comprises a base disc 170 with a base disc thickness 184. The base disc thickness 184 may e. g. be between 0.2 mm and 0.8 mm, between 0.4 mm and 0.6 mm, or 0.5 mm. The spacer body 160 further comprises a plurality of eight radial ribs 174, of which five are visible in Fig. 3A. The thickness of the base disc 170 and the radial ribs 174 combined is described by an overall base thickness 182. The overall base thickness 182 may e. g. be between 0.8 mm and 2 mm, between 1.2 mm and 1.6 mm, or 1.4 mm. The greater the overall base thickness 182 is in relation to the base disc thickness 184, the greater are the axial flexibility characteristics of the spacer body 160. Because of this greater flexibility, the valve seat body 110 will experience less resistance when being pressed against the spacer body 160 during assembly (as opposed to a full solid base disc 170 for example). The overall thickness of the spacer body 160, that is the thickness of the base disc 170 and of the annular protrusion 168 combined, is described by an overall spacer thickness 186. The overall spacer thickness 186 is may e. g. be between 2 mm and 5 mm, between 3 mm and 4 mm, or 3.5 mm.

Furthermore, the spacer body 160 comprises an annular protrusion 168, extending in a hollow cylindrical manner along a main axis AM of the spacer body 160 - which in a mounted state is coaxially aligned with the valve axis AV. The spacer body 160 further comprises a plurality of eight axial ribs 172, of which four are visible in Fig. 3A. Each axial rib 172 extends in the axial direction along an outer protrusion surface 180 of the annular protrusion 168. On an axial end opposite of the base disc 170, each axial rib 172 and/or the annular protrusion 168 can comprise a rib chamfer 188, which in particular can result in a sloped end of each axial rib. Alternatively, an approximately half-conical or half-dome shape of the end of each axial rib is possible. In preferred embodiments, the rib chamfer 188 extends only over the axial ribs 172. In alternative embodiments, the rib chamfer 188 extends over the axial ribs 172 as well as a part of the annular protrusion 168. The rib chamfer particularly has an angle of approximately 45°.

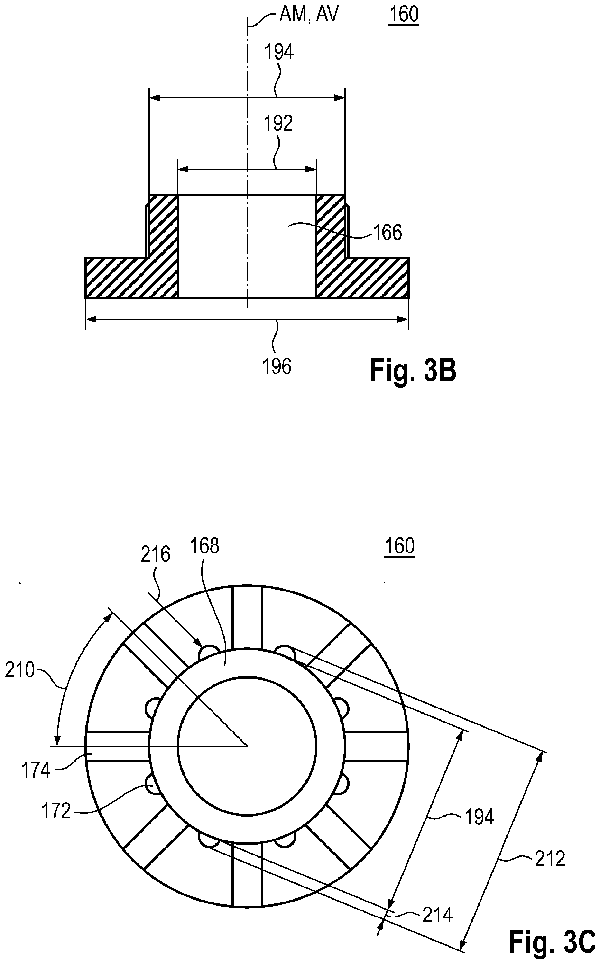

Fig. 3B shows a cross-sectional side view of the embodiment shown in Fig. 3A. The spacer body 160 comprises a ventilation bore 166, which extends cylindrically, with a ventilation bore diameter 192, along the main axis AM of the spacer body 160. The ventilation bore diameter 192 is may e. g. be between 2 mm and 10 mm, between 3 mm and 6 mm, or 4.7 mm. The annular protrusion 168 has a protrusion core diameter 194. The protrusion core diameter 194 may e. g. be between 5 mm and 8 mm, between 6.2 mm and 7.2 mm, or 6.7 mm. The spacer body 160, and here in particular the base disc 170, has an outer spacer diameter 196. The outer spacer diameter 196 may e. g. be between 6 mm and 16 mm, between 9 mm and 13 mm, or 11 mm.

Fig. 3C shows a top view of the embodiment of a spacer body 160 shown in Fig. 3A and Fig. 3B. From the top view, all eight radial ribs 174, as well as all eight axial ribs 172 are visible. The radial ribs 174 are equally aligned around the circumference of the base disc 170, each spaced from each other by a rib angle 210. The rib angle 210 may be 45°.

As each axial rib 172 extends outwards from the annular protrusion 168 in a radial direction, it comprises a rib thickness 214. The rib thickness 214 may e. g. be between 0.1 mm and 0.6 mm, between 0.3 mm and 0.4 mm, or 0.35 mm. The annular protrusion 168 including the axial rib thickness 214 has an outer protrusion diameter 212. The outer protrusion diameter 212 may be between 4 mm and 11 mm, between 6 mm and 9 mm, or 7.4 mm.

The outer protrusion diameter at 112 may be slightly greater, in particular between 2 % and 10 % greater, than an inner inlet diameter 114 of the valve seat body, in order to generate a radial force for fixing the spacer body in the valve seat body inlet 112.

Due to its semi-circular shape, each axial rib 172 has an axial rib radius 216. The axial rib radius 216 may be between 0.1 mm and 0.6 mm, between 0.3 mm and 0.4 mm, or 0.35 mm. Such a semi-circular shape with an axial rib radius 216 is particularly advantageous for an assembly of the spacer body 160. This is particularly the case because of the reduced radial contact between the spacer body 160 and the valve seat body inlet 112 (not shown), which decreases friction and/or the risk of excessive deformation, while still enabling a sufficient radial fixation force between the valve seat body 110 and the spacer body 160. The larger the outer protrusion diameter 212 is in relation to the protrusion core diameter 194, the greater is a radial flexibility of the annular protrusion 168. It is generally desirable for the spacer body 160 after assembly to be held fixed in its assembled position, in particular between the port body 140 and the valve seat body 110. In particular, after assembly, the spacer body 160 practically cannot be moved either in the radial or in the axial direction.

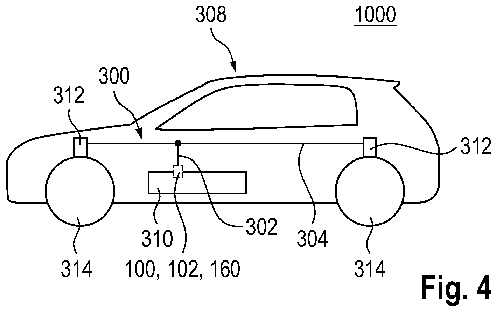

Fig. 4 schematically shows a vehicle 1000 comprising a cabin 308 and a cabin levelling system 300. The cabin levelling system 300 comprises four air springs 312, two of which are visible in Fig. 4, wherein each air spring 312 is assigned to a wheel 314. The vehicle further comprises an air supply unit 310, which is pneumatically connected to a main pressure line 304 via a conduit 302. A pneumatic valve 100 according to the concept of the invention, in the form of a pneumatic cabin levelling valve 102, is arranged in the conduit 302. The pneumatic valve 100 comprises a spacer body 160. In particular, the emission of noise during operation of the pneumatic valve 100 is advantageously reduced, in particular while the height of the cabin 308 is being adjusted through the cabin levelling system 300. The reduction of noise is particular advantageous for passengers of the vehicle 1000. The vehicle 1000 may be a commercial vehicle or a passenger vehicle, such as a car.

### List of reference signs (part of the description)

- 100: valve
- 102: pneumatic cabin levelling valve
- 106: axial gap
- 110: valve seat body
- 112: valve seat body inlet
- 114: inner inlet diameter
- 116: radial sealing
- 120: check valve body
- 122: retainer spring
- 124: valve seat
- 130: valve casing
- 132: valve seat body stop
- 140: port body
- 142: port passage
- 150: valve passage
- 150.1: inner section of the valve passage
- 150.2: outer section of the valve passage
- 160: spacer body
- 162: flexible material
- 164: rubber
- 166: ventilation bore
- 168: annular protrusion
- 170: base disc
- 172: axial rib
- 174: radial rib
- 176: valve-seat-facing side of the spacer body
- 178: port-body-facing side of the spacer body
- 180: outer protrusion surface
- 182: overall base thickness
- 184: base disc thickness
- 186: overall spacer thickness
- 188: rib chamfer
- 192: ventilation bore diameter
- 194: protrusion core diameter
- 196: outer spacer diameter
- 210: rib angle
- 212: outer protrusion diameter
- 214: axial rib thickness
- 216: axial rib radius
- 300: cabin levelling system
- 302: conduit
- 304: main pressure line
- 308: cabin
- 310: air supply unit
- 312: air spring
- 314: wheel
- 1000: vehicle
- AM: main axis of the spacer body
- AV: valve axis
- FA: air flow, pressurized air flow
- FL: gas flow
- IFL: inward flow direction
- SC: closed state
- SO: open state

## Claims

1. Pneumatic valve (100), in particular pneumatic cabin levelling valve (102) for a vehicle (1000), comprising a valve seat body (110) and a valve casing (130) and a port body (140), wherein
- the valve seat body (110) is held in a valve passage (150), which extends cylindrically through the valve casing (130) along a valve axis (AV), and
- the valve seat body (110) comprises a check valve body (120), movable along the valve axis (AV) between an open state (SO) to allow a gas flow in an inward flow direction (IFL) and a closed state (SC), and
- the port body (140) is held in the valve passage (150) axially adjacent to the valve seat body (110),
wherein
- a spacer body (160) is arranged between the port body (140) and the valve seat body (110), wherein
- the spacer body (160) comprises a base disc (170) with at least one ventilation bore (166), which is adapted for allowing a gas flow between the port body (140) and the valve seat body (110),
**characterized in that**
the spacer body (160) comprises an annular protrusion (168) adapted to engage with a valve seat body inlet (112) of the valve seat body (110).

2. Pneumatic valve (100) according to claim 1, **characterized in that** the spacer body (160) is made of a flexible material (162), in particular wherein the flexible material (162) is rubber (164).

3. Pneumatic valve (100) according to one of the preceding claims, **characterized in that** the annular protrusion (168) is in the shape of a hollow cylinder.

4. Pneumatic valve (100) according to one of the preceding claims, **characterized in that** the spacer body (160) comprises at least one axial rib (172), extending axially on the annular protrusion (168), in particular on an outer protrusion surface (180) of the annular protrusion (168).

5. Pneumatic valve (100) according to one of the preceding claims, **characterized in that** the spacer body (160) comprises at least one radial rib (174), extending radially on the base disc (170), in particular on a valve-seat-facing side (176) of the spacer body (160).

6. Pneumatic valve (100) according to one of claims 4 and 5, **characterized in that** an overall base thickness (182) of the base disc (170) with the axial and/or radial rib (172, 174) is between 0.5 mm and 1.15 mm.

7. Pneumatic valve (100) according to one of the preceding claims, **characterized in that** the ventilation bore (166) is cylindrical and/or an axis of the ventilation bore (166) is coaxially aligned with the valve axis (AV) and/or the main axis (AM).

8. Pneumatic valve (100) according to one of the preceding claims, **characterized in that** the pneumatic valve (100) is adapted as a pneumatic cabin levelling valve (102) for a vehicle (1000).

9. Cabin levelling system (300) for a vehicle (1000), with a conduit (302) for a gas flow (FL), in particular a pressurized air flow (FA), wherein the conduit (302) comprises a pneumatic valve (100) according to one of the preceding claims, wherein the pneumatic valve (100) is adapted as a pneumatic cabin levelling valve (102).

10. Vehicle (1000) with a cabin levelling system (300) of claim 9.

## Patentansprüche

1. Pneumatikventil (100), insbesondere Pneumatikinnenraumnivellierventil (102) für ein Fahrzeug (1000), umfassend einen Ventilsitzkörper (110) und ein Ventilgehäuse (130) und einen Anschlusskörper (140), wobei
- der Ventilsitzkörper (110) in einem Ventildurchgang (150), der sich durch das Ventilgehäuse (130) entlang einer Ventilachse (AV) zylindrisch erstreckt, gehalten wird und
- der Ventilsitzkörper (110) einen Rückschlagventilkörper (120) umfasst, der entlang der Ventilachse (AV) zwischen einem offenen Zustand (SO), um eine Gasströmung in einer nach innen gerichteten Strömungsrichtung (IFL) zu ermöglichen, und einem geschlossenen Zustand (SC) bewegbar ist, und
- der Anschlusskörper (140) in dem Ventildurchgang (150) axial angrenzend an den Ventilsitzkörper (110) gehalten wird, wobei
- ein Distanzkörper (160) zwischen dem Anschlusskörper (140) und dem Ventilsitzkörper (110) angeordnet ist, wobei
- der Distanzkörper (160) eine Basisscheibe (170) mit mindestens einer Entlüftungsbohrung (166) umfasst, die zum Ermöglichen einer Gasströmung zwischen dem Anschlusskörper (140) und dem Ventilsitzkörper (110) angepasst ist,
**dadurch gekennzeichnet, dass**
der Distanzkörper (160) einen ringförmigen Vorsprung (168) umfasst, der angepasst ist, um mit einem Ventilsitzkörpereinlass (112) des Ventilsitzkörpers (110) in Eingriff zu sein.

2. Pneumatikventil (100) nach Anspruch 1, **dadurch gekennzeichnet, dass** der Distanzkörper (160) aus einem flexiblen Material (162) hergestellt ist, insbesondere wobei das flexible Material (162) Gummi (164) ist.

3. Pneumatikventil (100) nach einem der vorstehenden Ansprüche,
**dadurch gekennzeichnet, dass** der ringförmige Vorsprung (168) in der Form eines Hohlzylinders ist.

4. Pneumatikventil (100) nach einem der vorstehenden Ansprüche,
**dadurch gekennzeichnet, dass** der Distanzkörper (160) mindestens eine axiale Rippe (172) umfasst, die sich an dem ringförmigen Vorsprung (168), insbesondere an einer Außenvorsprungsoberfläche (180) des ringförmigen Vorsprungs (168), axial erstreckt.

5. Pneumatikventil (100) nach einem der vorstehenden Ansprüche,
**dadurch gekennzeichnet, dass** der Distanzkörper (160) mindestens eine radiale Rippe (174) umfasst, die sich an der Basisscheibe (170), insbesondere an einer dem Ventilsitz zugewandten Seite (176) des Distanzkörper (160), radial erstreckt.

6. Pneumatikventil (100) nach einem der Ansprüche 4 und 5,
**dadurch gekennzeichnet, dass** eine Gesamtbasisdicke (182) der Basisscheibe (170) mit der axialen und/oder der radialen Rippe (172, 174) zwischen 0,5 mm und 1,15 mm beträgt.

7. Pneumatikventil (100) nach einem der vorstehenden Ansprüche,
**dadurch gekennzeichnet, dass** die Entlüftungsbohrung (166) zylindrisch ist und/oder eine Achse der Entlüftungsbohrung (166) mit der Ventilachse (AV) und/oder der Hauptachse (AM) koaxial ausgerichtet ist.

8. Pneumatikventil (100) nach einem der vorstehenden Ansprüche,
**dadurch gekennzeichnet, dass** das Pneumatikventil (100) als ein Pneumatikinnenraumnivellierventil (102) für ein Fahrzeug (1000) angepasst ist.

9. Innenraumnivelliersystem (300) für ein Fahrzeug (1000), mit einer Leitung (302) für eine Gasströmung (FL), insbesondere eine Druckluftströmung (FA), wobei die Leitung (302) ein Pneumatikventil (100) nach einem der vorstehenden Ansprüche umfasst, wobei das Pneumatikventil (100) als ein Pneumatikinnenraumnivellierventil (102) angepasst ist.

10. Fahrzeug (1000) mit einem Innenraumnivelliersystem (300) nach Anspruch 9.

## Revendications

1. Valve pneumatique (100), en particulier valve de nivellement de cabine pneumatique (102) pour un véhicule (1000), comprenant un corps de siège de valve (110) et un carter de valve (130) et un corps d'orifice (140), dans laquelle
- le corps de siège de valve (110) est maintenu dans un passage de valve (150), qui s'étend de manière cylindrique à travers le boîtier de valve (130) le long d'un axe de valve (AV), et
- le corps de siège de valve (110) comprend un corps de clapet anti-retour (120), mobile le long de l'axe de valve (AV) entre un état ouvert (SO) pour permettre un écoulement de gaz dans une direction d'écoulement vers l'intérieur (IFL) et un état fermé (SC), et
- le corps d'orifice (140) est maintenu dans le passage de valve (150) axialement adjacent au corps de siège de valve (110), dans laquelle
- un corps de cale (160) est agencé entre le corps d'orifice (140) et le corps de siège de valve (110), dans laquelle
- le corps de cale (160) comprend un disque de base (170) avec au moins un alésage de ventilation (166), qui est adapté pour permettre un écoulement de gaz entre le corps de port (140) et le corps de siège de valve (110),
**caractérisée en ce que**
le corps de cale (160) comprend une saillie annulaire (168) conçue pour venir en prise avec une entrée de corps de siège de valve (112) du corps de siège de valve (110).

2. Valve pneumatique (100) selon la revendication 1,
**caractérisée en ce que** le corps de cale (160) est constitué d'un matériau souple (162), en particulier dans laquelle le matériau souple (162) est du caoutchouc (164).

3. Valve pneumatique (100) selon l'une des revendications précédentes,
**caractérisée en ce que** la saillie annulaire (168) est en forme de cylindre creux.

4. Valve pneumatique (100) selon l'une des revendications précédentes,
**caractérisée en ce que** le corps de cale (160) comprend au moins une nervure axiale (172), qui tend axialement sur la saillie annulaire (168), en particulier sur une surface de saillie externe (180) de la saillie annulaire (168).

5. Valve pneumatique (100) selon l'une des revendications précédentes,
**caractérisée en ce que** le corps de cale (160) comprend au moins une nervure radiale (174), qui tend radialement sur le disque de base (170), en particulier sur un côté faisant face au siège de valve (176) du corps de cale (160).

6. Valve pneumatique (100) selon l'une des revendications 4 et 5,
**caractérisée en ce qu'**une épaisseur de base globale (182) du disque de base (170) avec la nervure axiale et/ou radiale (172, 174) est comprise entre 0,5 mm et 1,15 mm.

7. Valve pneumatique (100) selon l'une des revendications précédentes,
**caractérisée en ce que** l'alésage de ventilation (166) est cylindrique et/ou un axe de l'alésage de ventilation (166) est aligné coaxialement avec l'axe de valve (AV) et/ou l'axe principal (AM).

8. Valve pneumatique (100) selon l'une des revendications précédentes,
**caractérisée en ce que** la valve pneumatique (100) est conçue en tant que valve de nivellement de cabine pneumatique (102) pour un véhicule (1000).

9. Système de nivellement de cabine (300) pour un véhicule (1000), avec un conduit (302) pour un écoulement de gaz (FL), en particulier un flux d'air sous pression (FA), dans lequel le conduit (302) comprend une valve pneumatique (100) selon l'une des revendications précédentes, dans lequel la valve pneumatique (100) est conçue en tant que valve pneumatique de nivellement de cabine (102).

10. Véhicule (1000) avec un système de nivellement de cabine (300) selon la revendication 9.
